# EUROPÄISCHE PATENTSCHRIFT

(11) **EP 2 748 042 B1**
(45) Veröffentlichungstag und Bekanntmachung des Hinweises auf die Patenterteilung: **24.01.2018**
(21) Anmeldenummer: 12743689.7
(22) Anmeldetag: 06.08.2012
(51) Int. Cl.: B60T 11/16, B60T 11/18, F15B 1/02, F15B 7/08, F16D 25/08, F16D 25/12, F15B 15/14, F15B 15/26, F16J 15/16, F16L 55/04, B60T 11/236, F16J 15/32

(54) **ANORDNUNG ZUR KOLBENSTANGENSEITIGEN ABDICHTUNG EINES GEBERZYLINDERS**
ARRANGEMENT FOR SEALING A MASTER CYLINDER ON THE SIDE OF THE PISTON ROD
SYSTÈME POUR L'ÉTANCHÉITÉ CÔTÉ TIGE DE PISTON D'UN CYLINDRE ÉMETTEUR

(30) Priorität: 26.08.2011 DE 102011081654
(43) Veröffentlichungstag der Anmeldung: 02.07.2014
(73) Patentinhaber: Schaeffler Technologies AG & Co. KG, 91074 Herzogenaurach (DE)
(72) Erfinder: FRIETSCH, Frank, 77830 Bühlertal (DE)
(86) Internationale Anmeldenummer: PCT/EP2012/003349
(87) Internationale Veröffentlichungsnummer: WO 2013/029741

(56) Entgegenhaltungen:
- EP-A1- 0 295 395
- EP-A1- 2 264 329
- EP-A2- 1 512 882
- EP-A2- 1 666 752
- DE-A1- 3 529 352
- DE-A1- 4 331 241
- DE-A1-102008 037 327
- DE-A1-102009 005 830
- GB-A- 384 724

## Beschreibung

Die Erfindung betrifft eine Anordnung zur kolbenstangenseitigen Abdichtung eines Geberzylinders, wie er insbesondere in hydraulisch arbeitenden Kupplungsausrück- oder in Bremssystemen eingesetzt wird.

Die Lebensdauer solcher Geberzylinder hängt im Wesentlichen von der Dichtigkeit zwischen Zylinder und Kolben ab. Bei den oben erwähnten hydraulischen Systemen handelt es sich im Allgemeinen um solche, die mit einem eng bemessenen Vorrat an Druckmedium arbeiten und nicht an ein Versorgungssystem angeschlossen sind, aus dem ständig Druckmedium nachgefördert wird. Daraus ergibt sich, dass die in solchen Systemen eingesetzten Baugruppen vor allem auf geringe Leckagen hin ausgelegt werden müssen. Für Geberzylinder bedeutet dies, dass sie gegen die Einwirkung von Schmutz auf die Zylinder-Kolben-Kolbenstangen-Baugruppe geschützt werden müssen.

Kolbenstangen von Geberzylindern führen sowohl Bewegungen in Längsrichtung der Kolbenstangen als auch Winkelbewegungen aus. Diese Winkelbewegungen stellen sich im Bereich der Abdichtung als Querbewegungen dar. Ausschließlich für lineare Führungen geeignete Dichtungsanordnungen sind daher bei Geberzylindern der vorliegenden Art nicht anwendbar.

Bekannterweise werden daher Geberzylinder kolbenstangenseitig mit Faltenbälgen abgedichtet. Solche Faltenbälge kapseln den Bereich zwischen dem Gehäuse des Geberzylinders und der Kolbenstange vollständig ab, indem sie mit beiden dicht verbunden sind.

Derartige Anordnungen sind beispielsweise aus der DE 10 2009 005 830 A1, aus der EP 1 512 882 A2 sowie aus der GB 384724 A1 bekannt.

Die voran stehend beschriebene Ausführungsform ist aber problematisch. Ein Faltenbalg vergrößert seinen Durchmesser, wenn er axial gestaucht wird. Er kann sich zudem auch auf eine Weise so deformieren, dass er nicht mehr ausschließlich die vorhandenen Falten axial staucht. Zudem weist ein solcher Faltenbalg eine große axiale Länge auf. Beim Einbau in übergeordnete Systeme ist deshalb ein entsprechender Freiraum für den Faltenbalg vorzusehen. Daraus ergibt sich, dass bei beengten räumlichen Verhältnissen Geberzylinder mit Faltenbälgen nicht einsetzbar sind. Weitere Probleme sind in einem erhöhten Materialeinsatz zu sehen. Werden nämlich langzeitstabile Materialien für die Faltenbälge eingesetzt, steigen die Kosten für diese deutlich an. Außerdem bedürfen Faltenbälge trotz aller Vorkehrungen ständig einer Kontrolle. Wird nicht erkannt, dass ein Faltenbalg gerissen oder beschädigt ist, kann Schmutz in die Zylinder-Kolben-Kolbenstangen-Baugruppe eindringen und den gesamten Geberzylinder unbrauchbar machen. Eindringender Schmutz kann Leckagen verursachen. Der eindringend Schmutz kann z. B. die Dichtungslaufbahn an dem Kolben des Geberzylinders beschädigen. Durch entstehende Kratzer kann das im Kolben enthaltene Medium nach außen entweichen. Eine richtige Funktion des Geberzylinders ist dann nicht mehr möglich.

Eine weitere bekannte Lösung sieht den Einsatz einer einfachen Schmutzkappe aus einem elastischen Material vor. Durch diese Schmutzkappe gleitet die Kolbenstange des Geberzylinders beispielsweise beim Auskuppeln hindurch. Allerdings besteht ein Problem dieser Lösung darin, dass eine erhöhte Reibung an der Kolbenstange zu verzeichnen ist und dass deshalb erhöhte Pedalkräfte erforderlich werden. Zudem sind solche Schutzkappen verschleißanfällig, sodass das Verschmutzungsrisiko und der Instandhaltungsaufwand deutlich erhöht werden.

Die Ansprüche an die Zuverlässigkeit von Geberzylindern steigen jedoch stetig. Dies wird beispielsweise durch den immer mehr zunehmenden Einsatz von Fahrzeugen in erhöht schmutz- bzw. staubbelasteten Regionen, wie beispielsweise beim Offroad-Fahren, beim Fahren in Wüstengebieten oder beim Fahren in Territorien mit unbefestigten Straßen, verursacht.

Unter Beachtung der sich aus den oben aufgeführten Nachteilen ergebenden Notwendigkeiten besteht die Aufgabe der vorliegenden Erfindung darin, eine Anordnung zur kolbenseitigen Abdichtung eines Geberzylinders zu schaffen, die einen kleinbauenden Geberzylinder, insbesondere für hydraulisch betätigte Kupplungs- bzw. Bremssysteme, ermöglicht, der hinsichtlich seiner Dichtigkeit in Bezug auf ein Eindringen von Schmutz hohen Ansprüchen genügt.

Die Aufgabe wird gelöst durch eine kolbenstangenseitige Abdichtung für einen Geberzylinder mit den Merkmalen des kennzeichnenden Teils des Patentanspruches 1 in Verbindung mit den Merkmalen des Oberbegriffes dieses Patentanspruches.

Nachgeordnete Patentansprüche betreffen besondere Ausführungsformen der gemäß Patentanspruch vorgeschlagenen Erfindung und beschränken die Erfindung als solche nicht.

In der nachfolgenden Beschreibung der Erfindung, den Ausführungsbeispielen und den Patentansprüchen werden die nachstehend aufgeführten Begriffe mit folgendem Sinngehalt verwendet:
"Geberzylinder" ist ein hydraulischer Arbeitszylinder, der über eine Kolbenstange mit einer von außen einwirkenden Kraft beaufschlagt wird, durch die ein Verschieben des Kolbens im Zylinder erfolgt und ein im Zylinderraum vorhandenes Druckmedium verdrängt wird. Solcher Art Zylinder werden vorrangig bei hydraulischen Übertragungssystemen eingesetzt, bei denen dem Geberzylinder ein oder mehrere Nehmerzylinder zugeordnet sind.

"Kolbenstangen" ist das Betätigungselement des Geberzylinders, das zumindest im Bereich der Abdichtung als zylindrisches Teil ausgeführt ist.

"Abdichtung" betrifft die Maßnahme, durch die die Gesamtheit der Teile des Geberzylinders gegen äußere Einflüsse, vor allem gegen Schmutz, abdichtet werden.

Erfindungsgemäß wird die Aufgabe durch eine Anordnung zur kolbenstangenseitigen Abdichtung eines Geberzylinders gelöst, bei der die mit dem Kolben des Geberzylinders verbundene Kolbenstange in Bezug auf das Gehäuse des Geberzylinders durch eine faltenbalgartige Abdichtung vor dem Eindringen von Schmutz in den Geberzylinder geschützt wird. Die Abdichtung ist zweiteilig ausgebildet und umfasst ein erstes relativ elastisches Dichtungsbauteil und ein zweites, relativ unelastisches Dichtungsbauteil, wobei das erste Dichtungsbauteil einerseits dicht mit dem Gehäuse des Geberzylinders und andererseits dicht mit dem zweiten Dichtungsbauteil in Verbindung steht. Das zweite Dichtungsbauteil ist dicht auf der Kolbenstange angeordnet und auf dieser verschiebbar.

Mithin wird gegenüber den aus dem Stand der Technik bekannten Lösungen vorteilhafter Weise erfindungsgemäß eine Anordnung zur kolbenstangenseitigen Abdichtung eines Geberzylinders geschaffen, die bei einer relativ kurzen Baulänge der Abdichtung einen wesentlich verringerten Verschleiß und eine wesentlich verbesserte Lebensdauer aufweist. Dies wird insbesondere dadurch erreicht, dass für die unterschiedlichen Aufgaben der Abdichtung, wie absoluter Staubschutz, Nachgiebigkeit, optimiertes Reibverhalten bzw. optimales tribologisches Verhalten und Verschleißfestigkeit, durch die Aufteilung in zwei Dichtungsbauteile, die jeweils optimalen Bedingungen und Materialeigenschaften an getrennten Orten, nämlich im Bereich des Gehäuses durch das erste Dichtungsbauteil und im Bereich der Kolbenstange durch das zweite Dichtungsbauteil gewählt werden können und Kompromisse unnötig sind.

Bei einer bevorzugten Ausführungsform besteht das erste Dichtungsteil aus einem ElastomerMaterial. Es ist dabei vorzugsweise kappenförmig ausgebildet. Die Art des Materials und dessen Eigenschaften können dabei abhängig von der Art der gewünschten Abdichtung gewählt werden.

Das zweite Dichtungsbauteil ist vorzugsweise ringförmig ausgebildet. Es kann hinsichtlich seiner Reibwertparameter gegenüber dem Kolbenstangenwerkstoff und den Spaltabmessungen so optimiert werden, das ein gutes Reibverhalten bei zugleich ausreichender Dichtigkeit gegenüber Schmutz gewährleistet ist. Besonders vorteilhaft ist eine Ausführungsform, bei der an dem Außenumfang des ringförmigen zweiten Dichtungsbauteiles wenigstens eine umlaufende Nut vorgesehen ist, in die ein radial innerer Rand einer mittigen Aussparung des ersten Verbindungsbauteiles eingreift.

Bevorzugt wird eine Ausführungsform, bei der das zweite Dichtungsbauteil aus einem relativ unelastischen, harten Material, insbesondere einem Polymer-Material besteht. Das Material des zweiten Dichtungsbauteiles kann hinsichtlich der Eigenschaften einer Reibpaarung zum Kolbenstangenmaterial optimiert werden.

Das kappenförmige erste Dichtungsbauteil kann einerseits mit einem Wulstbereich dicht in eine im Außendurchmesser des Geberzylinders angeordnete Nut eingreifen, während es andererseits mit einem wulstförmigen Randbereich einer inneren, mittigen Aussparung in eine Nut des zweiten Dichtungsbauteils eingreift.

Ferner kann das kappenförmig ausgebildete erste Dichtungsbauteil einen axial verlaufenden Wandbereich sowie einen radial verlaufenden Wandbereich aufweisen, wobei der axial verlaufende Wandbereich vorzugsweise einen in eine Umfangsnut des Gehäuse des Geberzylinders angeordneten Ring übergreift, der ein Abrutschen des axial verlaufenden Wandbereiches verhindert, wobei der axial verlaufende Wandbereich an seiner dem radial verlaufenden Wandbereich abgewandten Seite einen radial in Richtung auf die Kolbenstange verlaufenden, wulstförmigen Bereich aufweist, der den Ring ebenfalls übergreift.

Das erste Dichtungsteil weist zweckmäßigerweise zwischen dem radial verlaufenden Wandbereich und dem wulstförmigen Randbereich einen faltenbalgartigen Bereich auf, der die Flexibilität des ersten Dichtungsbauteiles erhöht. Dieser faltenbalgartige Bereich verläuft bei einer bevorzugten Ausführungsform der Erfindung ausgehend von dem radial verlaufenden Wandbereich zunächst schräg in Richtung auf den Kolben und nachfolgend wieder schräg in die entgegen gesetzte Richtung zu seinem wulstförmigen Randbereich, der in die Nut des zweiten Dichtungsteiles eingreift.

Die Erfindung wird nachstehend anhand eines Ausführungsbeispiels und einer Zeichnung näher beschrieben. Dabei zeigt:

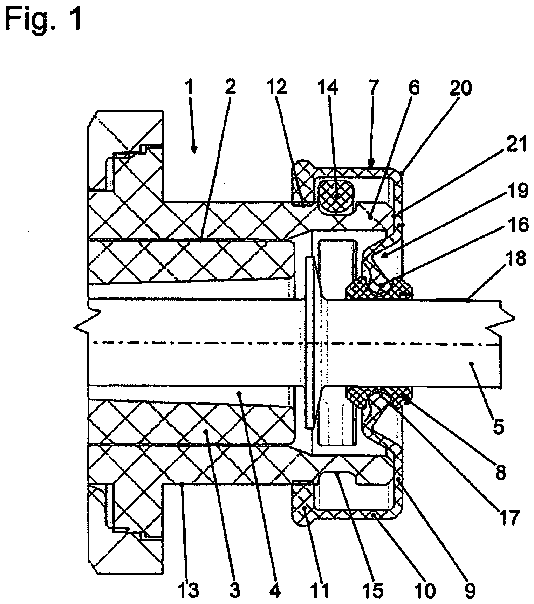

- Figur 1:: eine Schnittdarstellung des kolbenstangenseitigen Endes eines Geberzylinders mit den für die erfindungsgemäße Abdichtung erforderlichen Bauteilen in einer bevorzugten Ausführungsform.

Ein Geberzylinder 1 der vorliegenden Anordnung nimmt in seiner, in seinem Gehäuse 6 angeordneten Zylinderbohrung 2 einen Kolben 3 auf. In eine Bohrung 4 des Kolbens 3 greift eine Kolbenstange 5 ein. An dem der Kolbenstange 5 zugewandten Ende des Gehäuses 6 des Geberzylinders 1 ist eine Anordnung zur Abdichtung der Kolbenstange 5 in Bezug auf das Gehäuse 6 angeordnet. Die Anordnung zur Abdichtung umfasst ein erstes Dichtungsbauteil 7 und ein zweites Dichtungsbauteil 8.

Das erste Dichtungsbauteil 7 ist kappenförmig ausgestaltet und weist einen radial zur Längsachse des Geberzylinders 1 verlaufenden, kreisringförmige Wandbereich 9 und einen Wandbereich 10 auf, der konzentrisch zu der genannten Längsachse verläuft. Der Wandbereich 10 weist an seinem dem Kolben 3 zugewandten Endbereich einen radial in Richtung auf das Gehäuse 6 vorstehenden wulstförmigen Bereich 11 auf, dessen Innendurchmesser kleiner ist, als der Außendurchmesser 13 des Gehäuses 6. Der Innenumfang des wulstförmigen Bereiches 11 liegt daher fest und dicht am Außenumfang des Gehäuses 6 an. Vorzugsweise besitzt der wülstförmige Bereich 11 eine größere Dicke als der Wandbereich 10. Es ist zweckmäßigerweise auch denkbar, dass der wulstförmige Bereich 11 in eine Umfanngsnut 12 des Gehäuses 6 dicht eingreift.

Der wulstförmige Bereich 11 übergreift vorzugsweise einen Ring 14, der zumindest teilweise in eine Nut 15 des Gehäuses 6 eingreift und dem ersten Dichtungsbauteil 7 eine zusätzliche Sicherheit gegen ein axiales Abrutschen vom Gehäuse 6 verleiht.

Das erste Dichtungsbauteil 7 weist im Gebiet des Innenumfanges seines radial verlaufenden Wandbereiches 9 einen weiteren wulstförmig verdickten Randbereich 16 auf, wobei das erste Dichtungsteil 7 zwischen dem inneren Ende des radial verlaufende Wandbereiches 9 und dem wulstförmigen Randbereich 16, vorzugsweise ausgehend von dem inneren Ende zunächst bogenförmig in Richtung auf den Kolben 3 und anschließend wieder in Richtung auf die dem Kolben 3 abgewandte Seite verläuft. Dadurch wird eine hohe Elastizität des vorzugsweise aus einem Gummimaterial bestehenden ersten Dichtungsbauteiles 7 erreicht, das dadurch außerdem die Funktion eines Faltenbalges erhält.

Das zweite Dichtungsbauteil 8 weist die Form eines auf der Kolbenstange 5 angeordneten Gleitringes auf, der eine Nut 17 besitzt, in die der wulstförmige Randbereich 16 des ersten Dichtungsbauteiles 7 dicht eingreift. Das zweite Dichtungsbauteil 8 besteht aus einem Material, das eine größere Härte besitzt als das Material des ersten Dichtungsbauteiles 7. Vorzugsweise besteht das zweite Dichtungsbauteil 8 aus einem Polymermaterial.

Der wulstförmige Bereich 16 besitzt einem kleineren Innenradius als dem Radius der Nut 17. Zwischen dem zweiten Dichtungsbauteil 8 und dem Außendurchmesser 18 der Kolbenstange 5 besteht eine Reibpaarung. Das heißt, das zweite Dichtungsbauteil 8 kann sich auf der Kolbenstange 5 bewegen. Dies ist typischerweise der Fall, wenn die Kolbenstange 5 bei der Betätigung des Geberzylinders 1 bewegt wird. In diesem Fall gleitet das zweite Dichtungsbauteil 8 auf der Kolbenstange 5.

Wenn auf die Kolbenstange 5 oder auf den Geberzylinder 1 relative kleine Schwingungen einwirken, die zu Relativbewegungen zwischen diesen beiden Bauteilen führen, kann das zweite Dichtungsbauteil 8 diese Bewegungen ohne axiale Verschiebungen auf der Kolbenstange 5 ausführen, da das erste Dichtungsbauteil 7 wegen seiner faltenbalgartigen Ausgestaltung und seiner elastischen Eigenschaften diese Bewegungen aufnehmen und ausgleichen kann.

Zudem kann das erste Dichtungsbauteil 7 mit seinem Wandbereich 10 und dem radial über das vordere Ende des Gehäuses 1 vorstehenden äußeren Bereich 20 seines kreisringförmigen Wandbereiches 9 insbesondere noch dann weiter axial nachgeben, wenn sich der radial verlaufende Wandbereich 9 mit seiner dem Kolben 3 zugewandten Innenfläche auf einem spitz zulaufenden Ende des Gehäuses 6 anstützt.

Damit kann sichergestellt werden, dass das zweite Dichtungsbauteil 8 nur dann eine Relativbewegung auf der Kolbenstange 5 ausführt, wenn deren Betätigungsweg eine bestimmte Größe überschreitet. Somit entsteht zwischen dem zweiten Dichtungsbauteil 8 und der Kolbenstange 5 nur wenig Reibung. Ein Verschleiß wird daher weitgehend vermieden.

Die Erfindung ermöglicht also vorteilhafter Weise eine Abdichtung des Inneren des Gehäuses 6 eines Geberzylinders 1 in Bezug auf die Kolbenstange 5 desselben, wobei mit einem ersten relativ elastischen, faltenbalgartigen Dichtungsbauteil 7 die Abdeckung des gesamten Zylinder-Kolben-Kolbenstangen-Bereiches des Geberzylinders 1 erreicht wird und zugleich mit einem optimierten zweiten, relativ unelastischen und harten Dichtungsbauteil 8 eine Abdichtung im Bereich der Kolbenstange 5 erreicht wird. Diese Abdichtung schafft im Hinblick au die Dichtigkeit und auf die Reibungsverhältnisse optimale Voraussetzungen. Zudem ist der für die Abdichtung erforderliche Bauraum relativ gering.

### Bezugszeichenliste

- a.: Geberzylinder
- 2: Zylinderbohrung
- 3: Kolben
- 4: Bohrung
- 5: Kolbenstange
- 6: Gehäuse
- 7: Dichtungsbauteil
- 8: Dichtungsbauteil
- 9: Wandbereich
- 10: Wandbereich
- 11: wulstförmiger Bereich
- 12: Nut
- 13: Außendurchmesser
- 14: Ring
- 15: Nut
- 16: Randbereich
- 17: Nut
- 18: Außendurchmesser
- 19: faltenbalgartiger Bereich
- 20: Bereich
- 21: Ende

## Patentansprüche

1. Anordnung zur kolbenstangenseitigen Abdichtung eines Geberzylinders (1), insbesondere eines hydraulisch betätigten Kupplungs- oder Bremssystems,
bei der die mit dem Kolben (3) des Geberzylinders (1) verbundene Kolbenstange (5) in Bezug auf das Gehäuse (6) des Geberzylinders (1) durch eine faltenbalgartige Abdichtung vor dem Eindringen von Schmutz in den Geberzylinder (1) geschützt ist, wobei die Abdichtung ein erstes relativ elastisches Dichtungsbauteil (7) und ein zweites, relativ unelastisches Dichtungsbauteil (8) umfasst, dass das erste Dichtungsbauteil (7) einerseits dicht mit dem Gehäuse (6) des Geberzylinders (1) und andererseits dicht mit dem zweiten Dichtungsbauteil (8) in Verbindung steht, **dadurch gekennzeichnet, dass** das zweite Dichtungsbauteil (8) dicht auf der Kolbenstange (5) angeordnet und auf dieser verschiebbar ist.

2. Anordnung nach Patentanspruch 1,
**dadurch gekennzeichnet, dass** das erste Dichtungsbauteil (7) aus einem ElastomerMaterial, vorzugsweise aus einem Gummimaterial besteht.

3. Anordnung nach Patentanspruch 1 oder 2,
**dadurch gekennzeichnet, dass** das erste Dichtungsbauteil (7) scheiben- oder kappenförmig ausgebildet ist.

4. Anordnung nach einem der Patentansprüche 1 bis 3,
**dadurch gekennzeichnet, dass** das zweite Dichtungsbauteil (8) ringförmig ausgebildet ist und vorzugsweise an seinem Umfang wenigstens eine umlaufende Nut (17) aufweist, in die ein radial innerer Randbereich (16) des ersten Verbindungsbauteiles (7), der vorzugsweise wulstförmig ausgebildet ist, dicht eingreift.

5. Anordnung nach einem der Patentansprüche 1 bis 4,
**dadurch gekennzeichnet, dass** das zweite Dichtungsbauteil (8) aus einem gegenüber dem Material der Kolbenstange (5) weichen Material, vorzugsweise aus einem Polymermaterial, besteht.

6. Anordnung nach einem der Patentansprüche 1 bis 5,
**dadurch gekennzeichnet, dass** das kappenförmige erste Dichtungsbauteil (7) einerseits mit einem Bereich (11) dicht am Außendurchmesser des Gehäuses (6) angreift oder dicht in eine im Außendurchmesser (13) des Geberzylinders (1) angeordnete Nut (12) eingreift, während es andererseits mit einem inneren Randbereich (16) in eine Nut (17) des zweiten Dichtungsbauteils (8) eingreift.

7. Anordnung nach einem der Patentansprüche 1 bis 6,
**dadurch gekennzeichnet, dass** das erste Dichtungsbauteil (7) kappenförmig ausgebildet ist, und einen axial verlaufenden Wandbereich (10) sowie einen radial verlaufenden Wandbereich (9) aufweist, dass der axial verlaufende Wandbereich (10) einen in einer Umfangsnut (15) des Gehäuse (6) des Geberzylinders (1) wenigstens teilweise angeordneten Ring (14) übergreift, und dass der axial verlaufende Wandbereich (10) des ersten Dichtungsbauteiles (7) an seiner dem radial verlaufenden Wandbereich (9) abgewandten Seite einen radial in Richtung auf die Kolbenstange (5) verlaufenden, wulstförmigen Bereich (11) aufweist, der den Ring (14) ebenfalls übergreift.

8. Anordnung nach Patentanspruch 6 oder 7,
**dadurch gekennzeichnet, dass** das erste Dichtungsteil (7) zwischen dem radial verlaufenden Wandbereich (9) und dem wulstförmigen Randbereich (16) einen faltenbalgartigen Bereich (19) aufweist.

9. Anordnung nach Patentanspruch 8,
**dadurch gekennzeichnet, dass** der faltenbalgartige Bereich (19) durch einen vom radial verlaufenden Wandbereich (9) zunächst schräg in Richtung auf den Kolben (3) verlaufenden und einen anschließenden, in der entgegen gesetzten Richtung verlaufenden Teilbereich gebildet ist.

10. Anordnung nach einem der Patentansprüche 7 bis 9,
**dadurch gekennzeichnet, dass** das Gehäuse (6) an seiner dem radial verlaufenden Wandbereich (9) zugewandten Seite ein abgerundetes oder spitzes Ende (21) aufweist, an dem sich der radial verlaufende Wandbereich (9) abstützt.

## Claims

1. Arrangement for sealing a master cylinder (1) on the piston rod side, in particular of a hydraulically actuated clutch or brake system, in which arrangement the piston rod (5) which is connected to the piston (3) of the master cylinder (1) is protected against the penetration of dirt into the master cylinder (1) by way of a gaiter-like seal in relation to the housing (6) of the master cylinder (1), the seal comprising a first relatively elastic seal component (7) and a second, relatively inelastic seal component (8), the first seal component (7) being connected on one side in a sealed manner to the housing (6) of the master cylinder (1) and on the other side in a sealed manner to the second seal component (8), **characterized in that** the second seal component (8) is arranged in a sealed manner on the piston rod (5) and can be displaced on the latter.

2. Arrangement according to Patent Claim 1, **characterized in that** the first seal component (7) consists of an elastomer material, preferably of a rubber material.

3. Arrangement according to Patent Claim 1 or 2, **characterized in that** the first seal component (7) is of disc-shaped or cap-shaped configuration.

4. Arrangement according to one of Patent Claims 1 to 3, **characterized in that** the second seal component (8) is of annular configuration and preferably has at least one circumferential groove (17) on its circumference, into which circumferential groove (17) a radially inner edge region (6) of the first connecting component (7) engages in a sealed manner, which edge region (16) is preferably of bead-shaped configuration.

5. Arrangement according to one of Patent Claims 1 to 4, **characterized in that** the second seal component (8) consists of a material which is soft in comparison with the material of the piston rod (5), preferably of a polymer material.

6. Arrangement according to one of Patent Claims 1 to 5, **characterized in that** the cap-shaped first seal component (7) firstly acts with a region (11) in a sealed manner on the external diameter of the housing (6) or engages in a sealed manner into a groove (12) which is arranged in the external diameter (13) of the master cylinder (1), whereas it secondly engages with an inner edge region (16) into a groove (17) of the second seal component (8).

7. Arrangement according to one of Patent Claims 1 to 6, **characterized in that** the first seal component (7) is of cap-shaped configuration and has an axially running wall region (10) and a radially running wall region (9), **in that** the axially running wall region (10) engages over a ring (14) which is arranged at least partially in a circumferential groove (15) of the housing (6) of the master cylinder (1), and **in that**, on its side which faces away from the radially running wall region (9), the axially running wall region (10) of the first seal component (7) has a bead-shaped region (11) which runs radially in the direction of the piston rod (5) and likewise engages over the ring (14).

8. Arrangement according to Patent Claim 6 or 7, **characterized in that** the first seal part (7) has a gaiter-like region (19) between the radially running wall region (9) and the bead-shaped edge region (16).

9. Arrangement according to Patent Claim 8, **characterized in that** the gaiter-like region (19) is formed by way of a part region which runs from the radially running wall region (9) first of all obliquely in the direction of the piston (3), and by way of an adjoining part region which runs in the opposite direction.

10. Arrangement according to one of Patent Claims 7 to 9, **characterized in that**, on its side which faces the radially running wall region (9), the housing (6) has a rounded or pointed end (21), on which the radially running wall region (9) is supported.

## Revendications

1. Système pour l'étanchéité côté tige de piston d'un cylindre émetteur (1), en particulier d'un système d'embrayage ou de freinage à commande hydraulique, dans lequel la tige de piston (5) reliée au piston (3) du cylindre émetteur (1) est protégée par rapport au corps (6) du cylindre émetteur (1) par une étanchéité de type soufflet à plis contre la pénétration de crasses dans le cylindre émetteur (1), dans lequel l'étanchéité comprend un premier élément d'étanchéité relativement élastique (7) et un deuxième élément d'étanchéité relativement inélastique (8), dans lequel le premier élément d'étanchéité (7) est en liaison d'une part de façon étanche avec le corps (6) du cylindre émetteur (1) et d'autre part de façon étanche avec le deuxième élément d'étanchéité (8), **caractérisé en ce que** le deuxième élément d'étanchéité (8) est disposé de façon étanche sur la tige de piston (5) et est déplaçable sur celle-ci.

2. Système selon la revendication 1, **caractérisé en ce que** le premier élément d'étanchéité (7) se compose d'un matériau élastomère, de préférence d'un matériau de caoutchouc.

3. Système selon la revendication 1 ou 2, **caractérisé en ce que** le premier élément d'étanchéité (7) est réalisé en forme de rondelle ou de capuchon.

4. Système selon l'une quelconque des revendications 1 à 3, **caractérisé en ce que** le deuxième élément d'étanchéité (8) est réalisé sous forme annulaire et présente de préférence à sa périphérie au moins une rainure périphérique (17), dans laquelle une zone de bord radialement intérieure (16) du premier élément d'étanchéité (7), qui est de préférence réalisée en forme de bourrelet, s'engage de façon étanche.

5. Système selon l'une quelconque des revendications 1 à 4, **caractérisé en ce que** le deuxième élément d'étanchéité (8) se compose d'un matériau souple par rapport au matériau de la tige de piston (5), de préférence en un matériau polymère.

6. Système selon l'une quelconque des revendications 1 à 5, **caractérisé en ce que** le premier élément d'étanchéité en forme de capuchon (7) s'applique d'une part par une région (11) de façon étanche sur le diamètre extérieur du corps (6) ou s'engage de façon étanche dans une rainure (12) disposée dans le diamètre extérieur (13) du cylindre émetteur (1), tandis qu'il s'engage d'autre part avec une région de bord intérieure (16) dans une rainure (17) du deuxième élément d'étanchéité (8).

7. Système selon l'une quelconque des revendications 1 à 6, **caractérisé en ce que** le premier élément d'étanchéité (7) est réalisé en forme de capuchon, et présente une région de paroi s'étendant axialement (10) ainsi qu'une région de paroi s'étendant radialement (9), **en ce que** la région de paroi s'étendant axialement (10) recouvre un anneau (14) disposé au moins en partie dans une rainure périphérique (15) du corps (6) du cylindre émetteur (1), et **en ce que** la région de paroi s'étendant axialement (10) du premier élément d'étanchéité (7) présente sur son côté détourné de la région de paroi s'étendant radialement (9) une région en forme de bourrelet (11) s'étendant radialement en direction de la tige de piston (5), qui recouvre également l'anneau (14).

8. Système selon la revendication 6 ou 7, **caractérisé en ce que** le premier élément d'étanchéité (7) présente entre la région de paroi s'étendant radialement (9) et la région de bord en forme de bourrelet (16) une région du type soufflet à plis (19).

9. Système selon la revendication 8, **caractérisé en ce que** la région du type soufflet à plis (19) est formée par une région partielle s'étendant d'abord en oblique en direction du piston (3) à partir de la région de paroi s'étendant radialement (9) et une région partielle adjacente s'étendant dans la direction opposée.

10. Système selon l'une quelconque des revendications 7 à 9, **caractérisé en ce que** le corps (6) présente sur son côté tourné vers la région de paroi s'étendant radialement (9) une extrémité arrondie ou pointue (21), sur laquelle s'appuie la région de paroi s'étendant radialement (9).
